# EUROPEAN PATENT APPLICATION

(11) **EP 4 693 450 A1**
(43) Date of publication of application: **11.02.2026**
(21) Application number: 24778581.9
(22) Date of filing: 19.01.2024
(51) Int. Cl.: H01M 4/139, H01M 4/62

(54) **METHOD FOR PRODUCING POSITIVE ELECTRODE COMPOSITION AND METHOD FOR PRODUCING POSITIVE ELECTRODE**

(30) Priority: 31.03.2023 JP 2023057101
(71) Applicant: Denka Company Limited, Tokyo 103-8338 (JP)
(72) Inventor: MATSUI Mizuki, Tokyo 103-8338 (JP); NAGAI Tatsuya, Tokyo 103-8338 (JP)
(74) Representative: Hoffmann Eitle
(86) International application number: PCT/JP2024/001445
(87) International publication number: WO 2024/202435

(57) **Abstract**

A method for producing a positive electrode composition, the method including: a preparation step of preparing a first slurry containing carbon black and a first liquid medium; and a mixing step of obtaining a positive electrode composition by mixing the first slurry, a binding material, carbon nanotubes, and an active material, wherein in a volume-based particle size distribution of a particle group combining secondary particles of the carbon black and a tertiary particle obtained by aggregation of the secondary particles in the first slurry, D₅₀ is 0.3 µm or more and 0.9 µm or less, and a ratio (D₅₀/(D₉₀ - D₁₀)) of D₅₀ to the difference between D₁₀ and D₉₀ is 0.2 or more and 0.8 or less.

## Description

### TECHNICAL FIELD

The present invention relates to a method for producing a positive electrode composition and a method for producing a positive electrode.

### BACKGROUND

A rise in environmental and energy issues has prompted active development of technologies for realizing a low-carbon society that reduces dependence on fossil fuels. Such technological developments are wide-ranging and include development of low-emission vehicles such as hybrid electric vehicles and electric vehicles, the development of natural energy power generation and storage systems such as solar power generation and wind power generation, the development of next-generation power grids that efficiently supply power and reduce power transmission loss, and the like.

One of the key devices required in common for such technology is a battery, and such a battery is required to have a high energy density for system miniaturization. In addition, there is a need for high output characteristics to enable stable supply of electric power without being affected by the operating environment temperatures. Furthermore, there is also a need for favorable cycle characteristics and the like for being able to withstand long-term use. For this reason, conventional lead-acid batteries, nickel-cadmium batteries, and nickel-hydrogen batteries are rapidly being replaced by lithium-ion secondary batteries having higher energy density, output characteristics, and cycle characteristics.

Conventionally, a positive electrode of a lithium-ion secondary battery is produced by applying a positive electrode paste containing a positive electrode active material, an electrical conducting material, and a binding material (also referred to as a binder) to a current collector. As the positive electrode active material, lithium-containing composite oxides such as lithium cobalt oxide and lithium manganese oxide have been used. In addition, since a positive electrode active material has poor electrical conductivity, an electrical conducting material such as carbon black has been added to a positive electrode paste for the purpose of imparting electrical conductivity (for example, Patent Document 1).

### CITATION LIST

### PATENT LITERATURE

Patent Document 1: JP 2008-227481 A

### SUMMARY OF INVENTION

### TECHNICAL PROBLEM

In recent years, there has been a need for further improvement in the performance of lithium-ion secondary batteries.

An object of the present invention is to provide a positive electrode composition with which a battery having low internal resistance and excellent discharge rate characteristics can be realized and a method for producing the same. In addition, an object of the present invention is to provide a positive electrode with which a battery having low internal resistance and excellent discharge rate characteristics can be realized and a method for producing the same.

### SOLUTION TO PROBLEM

The present invention relates, for example, to the following [1]-[7].
[1] A method for producing a positive electrode composition, the method including:
   a preparation step of preparing a first slurry containing carbon black and a first liquid medium; and
   a mixing step of obtaining a positive electrode composition by mixing the first slurry, a binding material, carbon nanotubes, and an active material,
   wherein in a volume-based particle size distribution of a particle group combining secondary particles of the carbon black and a tertiary particle obtained by aggregation of the secondary particles in the first slurry, D₅₀ is 0.3 µm or more and 0.9 µm or less, and a ratio (D₅₀/(D₉₀ - D₁₀)) of D₅₀ to the difference between D₁₀ and D₉₀ is 0.2 or more and 0.8 or less.
[2] The method for production according to [1], wherein the mixing step includes:
   a first step of obtaining a mixed liquid by mixing the first slurry, a binding material solution containing the binding material and a second liquid medium, and a second slurry containing the carbon nanotubes and a third liquid medium; and
   a second step of obtaining the positive electrode composition by mixing the mixed liquid and an active material.
[3] The method for production according to [1], wherein the mixing step includes:
   a first step of obtaining a first mixed liquid by mixing the first slurry and a binding material solution containing the binding material and a second liquid medium;
   a second step of obtaining a second mixed liquid by mixing the first mixed liquid and a second slurry containing the carbon nanotubes and a third liquid medium; and
   a third step of obtaining the positive electrode composition by mixing the second mixed liquid and the active material.
[4] The method for production according to any one of [1] to [3], wherein the carbon black has a BET specific surface area of 100 m²/g or more and 400 m²/g or less and an average primary particle diameter of 17 nm or more and 30 nm or less.
[5] The method for production according to any one of [1] to [4], wherein the content of the carbon black in the positive electrode composition is 40 to 90% by mass based on the total amount of the carbon black and the carbon nanotubes.
[6] The method for production according to any one of [1] to [5], wherein in a volume-based particle size distribution of a particle group combining secondary particles of the carbon black and a tertiary particle obtained by aggregation of the secondary particles in the first slurry, D₁₀ is 0.15 µm or more and 0.42 µm or less, and D₉₀ is 0.9 µm or more and 4.0 µm or less.
[7] A method for producing a positive electrode, including a step of applying a positive electrode composition produced by the method for production according to any one of [1] to [6] onto a current collector, and forming a composite layer containing the carbon black, the carbon nanotubes, the binding material, and the active material on the current collector.

### EFFECTS OF INVENTION

According to the present invention, a positive electrode composition with which a battery having low internal resistance and excellent discharge rate characteristics can be realized and a method for producing the same are provided. In addition, according to the present invention, a positive electrode with which a battery having low internal resistance and excellent discharge rate characteristics can be realized and a method for producing the same are provided.

### DESCRIPTION OF EMBODIMENTS

Hereinafter, a preferred embodiment of the present invention will be described in detail.

### [Method for Producing Positive Electrode Composition]

The method for producing a positive electrode composition of the present embodiment includes: a preparation step of preparing a first slurry containing carbon black and a first liquid medium; and a mixing step of obtaining a positive electrode composition by mixing the first slurry, a binding material, carbon nanotubes, and an active material.

In the present embodiment, the volume-based particle size distribution of a particle group combining secondary particles of the carbon black and a tertiary particle obtained by aggregation of the secondary particles in the first slurry has a D₅₀ of 0.3 µm or more and 0.9 µm or less. In addition, in the particle size distribution above, the ratio (D₅₀/(D₉₀ - D₁₀)) of D₅₀ to the difference between D₁₀ and D₉₀ is 0.2 or more and 0.8 or less.

According to the method for producing a positive electrode composition of the present embodiment, it is possible to obtain a positive electrode composition with which a battery having low internal resistance and excellent discharge rate characteristics can be realized.

In the present embodiment, the carbon black and the carbon nanotubes function as electrical conducting materials. The basic role of an electrical conducting material is to impart electrical conductivity to a positive electrode active material having poor electrical conductivity. In addition, in a lithium-ion secondary battery, because positive electrode active materials expand and contract through repeated charging and discharging, the contact points between the positive electrode active materials are gradually lost, but the electrical conducting material also has a role of connecting the positive electrode active materials whose contact points have been lost.

When the dispersibility of the electrical conducting material with respect to the positive electrode active material is poor, the positive electrode active material and the electrical conducting material cannot make sufficient contact with each other, making it difficult to form a conductive path, resulting in a problem where the performance of the active material cannot be sufficiently brought out. As a result, portions with poor electrical conductivity appear locally in the positive electrode, which is considered to result in the active material not being sufficiently utilized, a decrease in discharge capacity, and a shorter battery life. In addition, increasing the content of the electrical conducting material has been contemplated in order to secure a conductive path, but from the viewpoint of improving battery characteristics, it is desirable to decrease the content of the electrical conducting material that does not contribute to charge/discharge capacity in the positive electrode and increase the content of the positive electrode active material.

In the method for producing a positive electrode composition of the present embodiment, because the carbon black in the first slurry forms particle groups in which D₅₀ and the ratio (D₅₀/(D₉₀-D₁₀)) are within the ranges above, the carbon black is efficiently disposed between the active materials and on the surface of the active materials. It is considered that this allows the formation of conductive paths between active materials due to cooperation between carbon black and carbon nanotubes to be attained more efficiently, thereby enabling both low internal resistance and excellent discharge rate characteristics to be achieved.

The steps of the method for producing a positive electrode composition of the present embodiment will be discussed in detail below.

### (Preparation Step)

The preparation step is a step of preparing a first slurry containing carbon black and a first liquid medium. The preparation step may be, for example, a step of obtaining a first slurry by mixing carbon black and a first liquid medium such that D₅₀ and the ratio (D₅₀/(D₉₀-D₁₀)) are within the ranges above.

### <Carbon Black>

The carbon black may be carbon black used as a general electrical conducting material for batteries, and may be acetylene black, furnace black, channel black, and the like. The carbon black is preferably acetylene black from the viewpoint of excellent purity and ease of obtaining excellent battery characteristics.

As the carbon black, carbon black having a BET specific surface area of 100 m²/g or more and 400 m²/g or less and an average primary particle diameter of 17 nm or more and 30 nm or less is preferred.

The BET specific surface area of the carbon black may be, for example, 100 m²/g or more, and may be 120 m²/g or more, 140 m²/g or more, or 160 m²/g or more. When the BET specific surface area of the carbon black is large, there are more electrical contact points with the active material and the electrical conducting materials and the electrical conductivity becomes favorable, such that more excellent battery characteristics tend to be more easily obtained.

The BET specific surface area of the carbon black may be, for example, 500 m²/g or less, and may be 450 m²/g or less, 400 m²/g or less, or 350 m²/g or less. When the BET specific surface area of the carbon black is small, the interaction between the liquid medium and the electrical conducting materials and the interaction between the electrical conducting materials are reduced, making it easier to mix the carbon black uniformly with the active material and form a strong conductive path, such that more excellent battery characteristics tend to be more easily obtained. That is, the BET specific surface area of the carbon black may be, for example, 100 m²/g or more and 500 m²/g or less, 100 m²/g or more and 450 m²/g or less, 100 m²/g or more and 400 m²/g or less, 100 m²/g or more and 350 m²/g or less, 120 m²/g or more and 500 m²/g or less, 120 m²/g or more and 450 m²/g or less, 120 m²/g or more and 400 m²/g or less, 120 m²/g or more and 350 m²/g or less, 140 m²/g or more and 500 m²/g or less, 140 m²/g or more and 450 m²/g or less, 140 m²/g or more and 400 m²/g or less, 140 m²/g or more and 350 m²/g or less, 160 m²/g or more and 500 m²/g or less, 160 m²/g or more and 450 m²/g or less, 160 m²/g or more and 400 m²/g or less, or 160 m²/g or more and 350 m²/g or less.

The BET specific surface area of the carbon black can be measured by a static capacity method according to JIS Z 8830 using nitrogen as an adsorbate.

The average primary particle diameter of the carbon black may be, for example, 17 nm or more and may be 18 nm or more. It is considered that when the average primary particle diameter of the carbon black is large, the interaction between the liquid medium and the electrical conducting materials and the interaction between the electrical conducting materials are reduced, making it easier to mix the carbon black uniformly with the active material and form a strong conductive path, such that excellent battery characteristics are more easily obtained.

In addition, the average primary particle diameter of the carbon black may be, for example, 30 nm or less, and may be 29 nm or less, 27 nm or less, 25 nm or less, 23 nm or less, or 21 nm or less. It is considered that when the average primary particle diameter of the carbon black is small, there are more electrical contact points with the active material and the electrical conducting materials and the electrical conductivity becomes favorable, such that excellent battery characteristics are more easily obtained. That is, the average primary particle diameter of the carbon black may be, for example, 17 nm or more and 30 nm or less, 17 nm or more and 29 nm or less, 17 nm or more and 27 nm or less, 17 nm or more and 25 nm or less, 17 nm or more and 23 nm or less, 17 nm or more and 21 nm or less, 18 nm or more and 30 nm or less, 18 nm or more and 29 nm or less, 18 nm or more and 27 nm or less, 18 nm or more and 25 nm or less, 18 nm or more and 23 nm or less, or 18 nm or more and 21 nm or less.

The average primary particle diameter of the carbon black means an average value of equivalent circle diameters measured based on images of the carbon black observed with a transmission electron microscope (TEM). Specifically, the average primary particle diameter of the carbon black is obtained by capturing ten images of the carbon black at a magnification of 100,000 times using transmission electron microscope JEM-2000FX (manufactured by JEOL Ltd.), measuring the equivalent circle diameters of 200 primary particles of the carbon black randomly extracted from the obtained images by means of image analysis, and arithmetically averaging the measured values.

The volume resistivity of the carbon black may be 0.30 Ω · cm or less or 0.25 Ω · cm or less from the viewpoint of excellent electrical conductivity. The volume resistivity of the carbon black is measured, for example, in a compressed state under a load of 7.5 MPa.

The ash content and the moisture content of the carbon black are not particularly limited. The ash content of the carbon black may be, for example, 0.04% by mass or less, and the moisture content of the carbon black may be, for example, 0.10% by mass or less.

The method for producing the carbon black is not particularly limited. The carbon black may be produced, for example, by means of a production method including a synthesis step for obtaining carbon black by treating a hydrocarbon-containing raw material gas in a cylindrical cracking furnace, and a high purification step for removing magnetic foreign matter from the carbon black obtained in the synthesis step with a magnet.

In the synthesis step, a raw material gas is treated in a cylindrical cracking furnace. The cylindrical cracking furnace may, for example, be provided with a thermal cracking unit in which a thermal cracking reaction of the hydrocarbon is performed, and an aging unit in which a thermal cracking reaction product is reformed. The cylindrical cracking furnace may further be provided with a supply port through which the raw material gas is supplied to the thermal cracking unit, and a recovery port through which carbon black generated in the aging unit is recovered.

In the thermal cracking unit, the supplied raw material gas is preferably retained at a temperature of 1900 °C or more for 30 to 150 seconds. When the retention time of the raw material gas is 30 seconds or more, it is possible to more reliably carry out the carbon aerosol formation based on the completion of the thermal cracking reaction and development of a chain structure. In addition, when the retention time of the raw material gas is 150 seconds or less, the aggregation of carbon aerosols is suppressed, which makes it more easier to remove the magnetic foreign matter in the high purification step and high-purity carbon black can be more easily obtained.

In the aging unit, the thermal cracking reaction product supplied from the thermal cracking unit is preferably retained at a temperature of 1700 °C or more for 20 to 90 seconds. When the retention time of the thermal cracking reaction product is 20 seconds or more, higher-quality carbon black can be more easily obtained by the reforming of the carbon aerosols and the promotion of the development of aggregates. In addition, when the retention time of the thermal cracking reaction product is 90 seconds or less, the aggregation of carbon aerosols is suppressed, which makes it more easier to remove the magnetic foreign matter in the high purification step and high-purity carbon black can be more easily obtained.

The residence time in each of the thermal cracking unit and the aging unit can be adjusted appropriately by adjusting the gas linear velocity of the circulating gas. The retention time in the aging unit is preferably shorter than the retention time in the thermal cracking unit. That is, the gas linear velocity in the aging unit is preferably faster than the gas linear velocity in the thermal cracking unit.

In the present embodiment, the raw material gas preferably includes acetylene as a carbon source. The content of the carbon source (such as acetylene) in the raw material gas is, for example, 10% by volume or more, preferably 20% by volume or more, and more preferably 30% by volume or more, and may be 100% by volume. The content of each component in the raw material gas indicates a volume ratio based on the volume at 100 °C and 1 atm.

The raw material gas may further include hydrocarbons other than the carbon source (such as acetylene). Examples of other hydrocarbons include methane, ethane, propane, ethylene, propylene, butadiene, benzene, toluene, xylene, gasoline, kerosene, light oil, and heavy oil. The addition of these other hydrocarbons can change the reaction temperature and increase or decrease the specific surface area of the carbon black. The other hydrocarbons are preferably selected from the group consisting of aromatic hydrocarbons such as benzene and toluene and unsaturated hydrocarbons such as ethylene and propylene.

When the raw material gas contains acetylene and other hydrocarbons, the content of the other hydrocarbons is, for example, 0.1 to 99 parts by volume, preferably 0.2 to 50 parts by volume, and more preferably 0.3 to 30 parts by volume with respect to 100 parts by volume of acetylene.

The raw material gas may further include water vapor gas, oxygen gas, hydrogen gas, carbon dioxide gas, and the like. As these gases, 99.9% by volume or more of high-purity gases are preferably used. The use of such high-purity gases tends to facilitate the production of carbon black with low magnetic foreign matter and stable BET specific surface area.

The content of the water vapor gas may be, for example, 0 to 80 parts by volume with respect to 100 parts by volume of the carbon source (such as acetylene) in the raw material gas, and is preferably 0.1 to 70 parts by volume, more preferably 1 to 60 parts by volume, and still more preferably 3 to 55 parts by volume. When the content of the water vapor gas is in the above range, the BET specific surface area of the carbon black tends to increase further.

In the synthesis step, it is preferable to supply the oxygen gas together with the raw material gas to the thermal cracking unit, and it is more preferable to supply the oxygen gas to the thermal cracking unit by injecting the oxygen gas from the circumference of the supply port through which the raw material gas is supplied to the thermal cracking unit.

The cylindrical cracking furnace preferably has an injection port for the oxygen gas near the supply port for the raw material gas and more preferably has a plurality of injection ports provided equally spaced so as to surround the supply port. The number of injection ports is preferably three or more and more preferably three to eight.

In addition, the cylindrical cracking furnace may also be provided with a nozzle with a multi-tube structure (for example, a double tube structure, a triple tube structure, or the like) having a supply port for the raw material gas and an injection port for spraying the oxygen gas from the circumference of the supply port. In the case of a double tube structure, for example, the raw material gas may be injected from the void portion on the inner cylinder side and the oxygen gas may be injected from the void portion on the outer cylinder side. In the case of a triple tube structure consisting of an inner tube, a middle tube, and an outer tube, for example, the oxygen gas may be injected from a void portion formed by the outer wall of the middle tube and the inner wall of the outer tube, and the raw material gas may be injected from the remaining void portion.

The injected amount of oxygen gas has no particular restrictions so long as the production yield of carbon black is not taken into consideration. Carbon black can be produced even when more oxygen gas than necessary is injected. The injected amount of oxygen gas may be, for example, 0 to 300 parts by volume, 0 to 250 parts by volume, 0 to 220 parts by volume, or 0 to 200 parts by volume with respect to 100 parts by volume of the carbon source (such as acetylene) in the raw material gas, and is preferably 0.1 to 190 parts by volume, more preferably 0.5 to 180 parts by volume, and still more preferably 1 to 160 parts by volume. When the injected amount of oxygen gas increases, the BET specific surface area of the carbon black tends to increase further, and when the injected amount of oxygen gas decreases, the primary particle diameter of the carbon black tends to increase.

In the synthesis step, for example, the primary particle diameter, the BET specific surface area, and the crystallite size (Lc) of the obtained carbon black can be adjusted by adjusting the addition rate of hydrocarbons other than acetylene, the amount of oxygen gas to be injected, and the like.

The high purification step is a step for removing magnetic foreign matter from the carbon black obtained in the synthesis step with a magnet. The high purification step may be, for example, a step for removing magnetic foreign matter from carbon black by bringing the carbon black obtained in the synthesis step into contact with a magnet or disposing the carbon black near the magnet (for example, passing the carbon black near the magnet).

The maximum surface magnetic flux density of the magnet is not particularly limited, and may be, for example, 700 mT or more, preferably 1000 mT or more, and more preferably 1200 mT or more. As a result, fine magnetic foreign matter adhering to the carbon black is more strongly adsorbed, which makes it easier to obtain carbon black having a lower nickel content. The upper limit of the maximum surface magnetic flux density of the magnet is not particularly limited, and may be, for example, 1400 mT or less. That is, the maximum surface magnetic flux density of the magnet may be, for example, 700 mT or more and 1400 mT or less, 1000 mT or more and 1400 mT or less, or 1200 mT or more and 1400 mT or less.

The high purification step may be a step for removing magnetic foreign matter from the carbon black, such that the nickel content is 50 ppb or less (preferably 40 ppb or less, more preferably 30 ppb or less, and still more preferably 20 ppb or less). The lower limit of the nickel content has no particular restrictions, and the nickel content in the carbon black may be, for example, 1 ppb or more, and from the viewpoint of cost and productivity, may be 10 ppb or more and 15 ppb or more. That is, the nickel content in the carbon black may be, for example, 1 ppb or more and 50 ppb or less, 1 ppb or more and 40 ppb or less, 1 ppb or more and 30 ppb or less, 1 ppb or more and 20 ppb or less, 10 ppb or more and 50 ppb or less, 10 ppb or more and 40 ppb or less, 10 ppb or more and 30 ppb or less, 10 ppb or more and 20 ppb or less, 15 ppb or more and 50 ppb or less, 15 ppb or more and 40 ppb or less, 15 ppb or more and 30 ppb or less, or 15 ppb or more and 20 ppb or less.

### <First Liquid Medium>

The first liquid medium is not particularly limited so long as the medium is a dispersion medium capable of finely dispersing carbon black. Examples of the first liquid medium include water, N-methyl-2-pyrrolidone, cyclohexane, methyl ethyl ketone, and methyl isobutyl ketone. Among these, N-methyl-2-pyrrolidone is preferable from the viewpoint of easy dispersibility of carbon black. N-methyl-2-pyrrolidone may be abbreviated herein as "NMP".

The content of carbon black in the first slurry may be, for example, 1% by mass or more, and may be 3% by mass or more, 5% by mass or more, 7% by mass or more, 9% by mass or more, or 10% by mass or more. A high carbon black content tends to make it easier to prepare a positive electrode composition having a high solids concentration.

In addition, the content of carbon black in the first slurry may be, for example, 30% by mass or less, and may be 25% by mass or less, 20% by mass or less, or 15% by mass or less. A low carbon black content makes it easier to obtain a positive electrode composition having a low viscosity. When the viscosity of the positive electrode composition is low, a uniform electrode is more easily obtained when the positive electrode composition is applied. That is, the content of carbon black in the first slurry may be, for example, 1% by mass or more and 30% by mass or less, 1% by mass or more and 25% by mass or less, 1% by mass or more and 20% by mass or less, 1% by mass or more and 15% by mass or less, 3% by mass or more and 30% by mass or less, 3% by mass or more and 25% by mass or less, 3% by mass or more and 20% by mass or less, 3% by mass or more and 15% by mass or less, 5% by mass or more and 30% by mass or less, 5% by mass or more and 25% by mass or less, 5% by mass or more and 20% by mass or less, 5% by mass or more and 15% by mass or less, 7% by mass or more and 30% by mass or less, 7% by mass or more and 25% by mass or less, 7% by mass or more and 20% by mass or less, 7% by mass or more and 15% by mass or less, 9% by mass or more and 30% by mass or less, 9% by mass or more and 25% by mass or less, 9% by mass or more and 20% by mass or less, 9% by mass or more and 15% by mass or less, 10% by mass or more and 30% by mass or less, 10% by mass or more and 25% by mass or less, 10% by mass or more and 20% by mass or less, or 10% by mass or more and 15% by mass or less.

### <Dispersant>

The first slurry may further contain a dispersant. The dispersant may be a component that has a function of assisting dispersion of carbon black in the first liquid medium.

Examples of dispersants include a high molecular weight type dispersant and a low molecular weight type dispersant, and from the viewpoint of long-term dispersion stability of carbon black, a high molecular weight type dispersant is preferable.

The dispersant may be, for example, a dispersant selected from the group consisting of polyvinyl alcohol, polyvinylpyrrolidone, polyvinyl butyral, carboxymethyl cellulose, and salts thereof, polyvinyl acetal, polyvinyl acetate, polyvinylamine, and polyvinyl formal.

The content of the dispersant in the first slurry may be, for example, 1 part by mass or more, and may be 3 parts by mass or more, 5 parts by mass or more, or 7 parts by mass or more with respect to 100 parts by mass of the carbon black. A high dispersant content tends to make it easier to more uniformly disperse the electrical conducting materials and make it easier to obtain more excellent battery characteristics. In addition, the content of the dispersant in the first slurry may be, for example, 50 parts by mass or less, and may be 30 parts by mass or less, 20 parts by mass or less, or 15 parts by mass or less with respect to 100 parts by mass of the carbon black. When the content of the dispersant is low, the insulation component in the positive electrode composition is reduced and the resistance of the electrode decreases, such that more excellent battery characteristics tend to be more easily obtained. That is, the content of the dispersant in the first slurry may be, for example, 1 part by mass or more and 50 parts by mass or less, 1 part by mass or more and 30 parts by mass or less, 1 part by mass or more and 20 parts by mass or less, 1 part by mass or more and 15 parts by mass or less, 3 parts by mass or more and 50 parts by mass or less, 3 parts by mass or more and 30 parts by mass or less, 3 parts by mass or more and 20 parts by mass or less, 3 parts by mass or more and 15 parts by mass or less, 5 parts by mass or more and 50 parts by mass or less, 5 parts by mass or more and 30 parts by mass or less, 5 parts by mass or more and 20 parts by mass or less, 5 parts by mass or more and 15 parts by mass or less, 7 parts by mass or more and 50 parts by mass or less, 7 parts by mass or more and 30 parts by mass or less, 7 parts by mass or more and 20 parts by mass or less, or 7 parts by mass or more and 15 parts by mass or less with respect to 100 parts by mass of the carbon black.

### <Particle Size Distribution of Carbon Black Particle Group in First Slurry>

The volume-based particle size distribution of a particle group combining secondary particles of carbon black and a tertiary particle obtained by aggregation of the secondary particles in the first slurry is measured by a laser diffraction/scattering method. Specifically, measurement is performed under the conditions below.
· Measuring instrument: Laser diffraction/scattering-type particle size distribution measuring device (Microtrac MT3300EXII manufactured by MicrotracBEL Corp.)
· Measurement conditions: Measurement range/0.02 to 2000 µm, particle permeability/absorption, particle shape/non-spherical, solvent/NMP, circulating output/5
Sample loading amount: The slurry is added and adjusted such that the transmittance (TR) displayed at the time of sample loading is 0.85 to 0.9.
The secondary particles of carbon black refer to particles that are formed by chemically bonding carbon black primary particles and are generally called aggregates in the structure-based classification of carbon black, and the tertiary particles of carbon black refer to particles that are generally called agglomerates.

Herein, D₁₀ means a 10% cumulative particle size (10% diameter) (µm), D₅₀ means a 50% cumulative particle size (50% diameter) (µm), and D₉₀ means a 90% cumulative particle size (90% diameter) (µm) in the particle size distribution above.

D₅₀ in the particle size distribution above is 0.3 µm or more and 0.9 µm or less. In addition, the ratio (D₅₀/(D₉₀ - D₁₀)) of D₅₀ to the difference between D₁₀ and D₉₀ in the particle size distribution is 0.2 or more and 0.8 or less.

D₅₀ may be 0.35 µm or more, 0.4 µm or more, or 0.5 µm or more. D₅₀ may be 0.85 µm or less. That is, D₅₀ may be, for example, 0.3 µm or more and 0.9 µm or less, 0.3 µm or more and 0.85 µm or less, 0.35 µm or more and 0.9 µm or less, 0.35 µm or more and 0.85 µm or less, 0.4 µm or more and 0.9 µm or less, 0.4 µm or more and 0.85 µm or less, 0.5 µm or more and 0.9 µm or less, or 0.5 µm or more and 0.85 µm or less.

The ratio (D₅₀/(D₉₀-D₁₀)) may be 0.25 or more, 0.3 or more, or 0.35 or more. In addition, the ratio (D₅₀/(D₉₀-D₁₀)) may be 0.7 or less, 0.6 or less, 0.5 or less, or 0.45 or less. That is, the ratio (D₅₀/(D₉₀-D₁₀)) may be, for example, 0.2 or more and 0.8 or less, 0.2 or more and 0.7 or less, 0.2 or more and 0.6 or less, 0.2 or more and 0.5 or less, 0.2 or more and 0.45 or less, 0.25 or more and 0.8 or less, 0.25 or more and 0.7 or less, 0.25 or more and 0.6 or less, 0.25 or more and 0.5 or less, 0.25 or more and 0.45 or less, 0.3 or more and 0.8 or less, 0.3 or more and 0.7 or less, 0.3 or more and 0.6 or less, 0.3 or more and 0.5 or less, 0.3 or more and 0.45 or less, 0.35 or more and 0.8 or less, 0.35 or more and 0.7 or less, 0.35 or more and 0.6 or less, 0.35 or more and 0.5 or less, or 0.35 or more and 0.45 or less.

D₁₀ may be 0.15 µm or more, 0.20 µm or more, or 0.25 µm or more. D₁₀ may be 0.42 µm or less, 0.40 µm or less, or 0.38 µm or less. That is, D₁₀ may be, for example, 0.15 µm or more and 0.42 µm or less, 0.15 µm or more and 0.40 µm or less, 0.15 µm or more and 0.38 µm or less, 0.20 µm or more and 0.42 µm or less, 0.20 µm or more and 0.40 µm or less, 0.20 µm or more and 0.38 µm or less, 0.25 µm or more and 0.42 µm or less, 0.25 µm or more and 0.40 µm or less, or 0.25 µm or more and 0.38 µm or less. D₉₀ may be 0.9 µm or more, 1.5 µm or more, or 2.0 µm or more. D₉₀ may be 4.0 µm or less, 3.0 µm or less, or 2.6 µm or less. That is, D₉₀ may be, for example, 0.9 µm or more and 4.0 µm or less, 0.9 µm or more and 3.0 µm or less, 0.9 µm or more and 2.6 µm or less, 1.5 µm or more and 4.0 µm or less, 1.5 µm or more and 3.0 µm or less, 1.5 µm or more and 2.6 µm or less, 2.0 µm or more and 4.0 µm or less, 2.0 µm or more and 3.0 µm or less, or 2.0 µm or more and 2.6 µm or less.

When the carbon black in the first slurry forms particle groups in which D₁₀ and D₉₀ are within the ranges above, the carbon black is more efficiently disposed between the active materials and on the surface of the active materials. It is considered that this allows the formation of conductive paths between active materials due to cooperation between carbon black and carbon nanotubes to be attained much more efficiently, thereby enabling both low internal resistance and excellent discharge rate characteristics to be achieved at a higher level.

In the present embodiment, D₁₀, D₅₀, D₉₀, and the ratio (D₅₀/(D₉₀- D₁₀)) can be adjusted by appropriately selecting a mixing method (for example, the stirring means, stirring time, and the like) at the time of slurry formation.

### <Viscosity of First Slurry>

The viscosity of the first slurry at 25 °C and a shear rate of 10 (1/sec) is desirably, for example, 100 to 1300 mPa·sec from the viewpoint of increasing the solids concentration of the positive electrode composition and making it easier to obtain a uniform positive electrode.

### <Method for Producing First Slurry>

The first slurry can be produced by mixing carbon black, a first liquid medium, and, as needed, a dispersant, such that the carbon black exhibits the particle size distribution discussed above.

The mixing method is not particularly limited and may be carried out by a known method (such as stirring and mixing with a bead mill, a ball mill, a sand mill, a twin-screw kneader, a rotation/revolution-type stirrer, a planetary mixer, a disperser mixer, or the like). These methods and devices can be employed in an appropriately combined manner.

Various conditions for mixing may be appropriately adjusted such that D₅₀ and the ratio (D₅₀/(D₉₀ - D₁₀)) are within the ranges discussed above. For example, by increasing the stirring time, D₅₀ tends to decrease and the ratio (D₅₀/(D₉₀ - D₁₀)) tends to increase. In addition, by reducing the stirring time, D₅₀ tends to increase and the ratio (D₅₀/(D₉₀ - D₁₀)) tends to decrease.

### (Mixing Step)

The mixing step is a step for obtaining a positive electrode composition by mixing a first slurry, a binding material, carbon nanotubes, and an active material.

The mixing step may be, for example, the first aspect or the second aspect below.

The first aspect of the mixing step includes: a first step of obtaining a mixed liquid by mixing a first slurry, a binding material solution containing a binding material and a second liquid medium, and a second slurry containing carbon nanotubes and a third liquid medium; and a second step of obtaining a positive electrode composition by mixing the mixed liquid and an active material.

According to the first aspect, as compared to when carbon black, carbon nanotubes, a binding material, and an active material are mixed at the same time, it is possible to obtain a positive electrode composition with which lower internal resistance and better discharge rate characteristics can be realized.

In the first step of the first aspect, the method of mixing the first slurry, the binding material solution, and the second slurry is not particularly limited. The mixing may be carried out by a known method (such as stirring and mixing with a ball mill, a sand mill, a twin-screw kneader, a rotation/revolution-type stirrer, a planetary mixer, a disperser mixer, or the like). The first step of the first aspect may be, for example, a step of obtaining a mixed liquid by loading the first slurry, the binding material solution, and the second slurry into a mixing container and then stirring the mixture.

The second step of the first aspect is a step of obtaining a positive electrode composition by mixing the mixed liquid obtained in the first step and an active material.

In the second step of the first aspect, the method of mixing the mixed liquid and the active material is not particularly limited. The mixing may be carried out by a known method (such as stirring and mixing with a ball mill, a sand mill, a twin-screw kneader, a rotation/revolution-type stirrer, a planetary mixer, a disperser mixer, or the like). The second step of the first aspect may be, for example, a step of obtaining a positive electrode composition by loading an active material into a mixing container containing the mixed liquid and then stirring the mixture.

The second aspect of the mixing step includes: a first step of obtaining a first mixed liquid by mixing a first slurry and a binding material solution containing a binding material and a second liquid medium; a second step of obtaining a second mixed liquid by mixing the first mixed liquid and a second slurry containing carbon nanotubes and a third liquid medium; and a third step of obtaining a positive electrode composition by mixing the second mixed liquid and an active material.

According to the second aspect, as compared to when carbon black, carbon nanotubes, a binding material, and an active material are mixed at the same time, it is possible to obtain a positive electrode composition with which lower internal resistance and better discharge rate characteristics can be realized.

In the first step of the second aspect, the method of mixing the first slurry and the binding material solution is not particularly limited. The mixing may be carried out by a known method (such as stirring and mixing with a ball mill, a sand mill, a twin-screw kneader, a rotation/revolution-type stirrer, a planetary mixer, a disperser mixer, or the like). The first step of the second aspect may be, for example, a step of obtaining a first mixed liquid by loading the first slurry and the binding material solution into a mixing container and then stirring the mixture.

In the second step of the first aspect, the method of mixing the first mixed liquid and the second slurry is not particularly limited. The mixing may be carried out by a known method (such as stirring and mixing with a ball mill, a sand mill, a twin-screw kneader, a rotation/revolution-type stirrer, a planetary mixer, a disperser mixer, or the like). The second step of the second aspect may be, for example, a step of obtaining a second mixed liquid by loading the second slurry into a mixing container containing the first mixed liquid and then stirring the mixture.

In the third step of the second aspect, the method of mixing the second mixed liquid and the active material is not particularly limited. The mixing may be carried out by a known method (such as stirring and mixing with a ball mill, a sand mill, a twin-screw kneader, a rotation/revolution-type stirrer, a planetary mixer, a disperser mixer, or the like). The third step of the second aspect may be, for example, a step of obtaining a positive electrode composition by loading an active material into a mixing container containing the second mixed liquid and then stirring the mixture.

One of the reasons why the effects above are provided by the first aspect and the second aspect is considered to be that in the first step, due to the interaction between the binding material and the carbon black, a dispersed state in which aggregation is less likely to occur and entanglement with the carbon nanotubes is less likely to occur is realized, thereby suppressing non-uniformity of the electrode structure caused by the aggregation of carbon black or the entanglement of carbon black and carbon nanotubes.

### <First Slurry>

The first slurry is prepared in the preparation step discussed above.

The amount of the first slurry used and the content of the carbon black in the first slurry may be appropriately changed such that the content of carbon black in the positive electrode composition is within a desired range.

### <Binding Material Solution>

The binding material solution includes a binding material and a second liquid medium.

Examples of binding materials include polyvinylidene fluoride, polytetrafluoroethylene, styrene-butadiene copolymers, and (meth)acrylic acid ester copolymers. The binding material polymer structure may be, for example, a random copolymer, an alternating copolymer, a graft copolymer, a block copolymer, or the like. The binding material is preferably polyvinylidene fluoride from the viewpoint of excellent voltage resistance.

The amount of the binding material solution used and the content of the binding material in the binding material are not particularly limited and may be appropriately changed such that the content of the binding material in the positive electrode composition is within a desired range.

The second liquid medium may be any liquid medium capable of dissolving the binding material and may be, for example, a liquid medium that is compatible with the first liquid medium and the third liquid medium. Examples of the second liquid medium include water, N-methyl-2-pyrrolidone, cyclohexane, methyl ethyl ketone, and methyl isobutyl ketone. Among these, N-methyl-2-pyrrolidone is preferable from the viewpoint of solubility. The second liquid medium may be the same as, or different than, the first liquid medium, but is preferably the same as the first liquid medium.

The content of the second liquid medium in the binding material solution is not particularly limited. The content may be any content so long as the binding material can be dissolved and may be appropriately changed such that the solids concentration of the positive electrode composition is within a desired range.

The solids concentration of the binding material solution is not particularly limited and may be, for example, 1% by mass or more, 2% by mass or more, 3% by mass or more, or 4% by mass or more. In addition, the solids concentration of the binding material solution may be, for example, 11% by mass or less, and may be 10% by mass or less or 9% by mass or less. That is, the solids concentration of the binding material solution may be, for example, 1% by mass or more and 11% by mass or less, 1% by mass or more and 10% by mass or less, 1% by mass or more and 9% by mass or less, 2% by mass or more and 11% by mass or less, 2% by mass or more and 10% by mass or less, 2% by mass or more and 9% by mass or less, 3% by mass or more and 11% by mass or less, 3% by mass or more and 10% by mass or less, 3% by mass or more and 9% by mass or less, 4% by mass or more and 11% by mass or less, 4% by mass or more and 10% by mass or less, or 4% by mass or more and 9% by mass or less.

The binding material solution may further contain components other than a binding material and a second liquid medium. Examples of other components in the binding material solution include an electrical conducting material, a thickener, and a surfactant. The binding material solution may further contain, for example, polyvinylpyrrolidone, polyvinylimidazole, polyethylene glycol, polyvinyl alcohol, polyvinyl butyral, carboxymethyl cellulose, cellulose acetate, a carboxylic acid-modified (meth)acrylic acid ester copolymer, or the like.

### <Second Slurry>

The second slurry includes carbon nanotubes and a third liquid medium.

The average diameter of the carbon nanotubes is preferably 5 nm or more. When the average diameter of the carbon nanotubes is 5 nm or more, the interaction between the liquid medium and the electrical conducting materials and the interaction between the electrical conducting materials are reduced, and the carbon nanotubes are likely to be more uniformly dispersed with respect to the active material. This makes it easier for conductive paths to be formed and makes it easier to obtain better battery characteristics. The average diameter of the carbon nanotubes may be 6 nm or more.

In addition, the average diameter of the carbon nanotubes is preferably 15 nm or less. When the average diameter of the carbon nanotubes is 15 nm or less, there are more electrical contact points between the active material and the electrical conducting materials, the effect of imparting electrical conductivity becomes favorable, and better battery characteristics are more easily obtained. From the viewpoint of further reducing the internal resistance and the viewpoint of better discharge rate characteristics, the average diameter of the carbon nanotubes is preferably 12 nm or less and more preferably 10 nm or less, and may be 9 nm or less, 8 nm or less, or 7 nm or less. That is, the average diameter of the carbon nanotubes may be, for example, 5 nm or more and 15 nm or less, 5 nm or more and 12 nm or less, 5 nm or more and 10 nm or less, 5 nm or more and 9 nm or less, 5 nm or more and 8 nm or less, 5 nm or more and 7 nm or less, 6 nm or more and 15 nm or less, 6 nm or more and 12 nm or less, 6 nm or more and 10 nm or less, 6 nm or more and 9 nm or less, 6 nm or more and 8 nm or less, or 6 nm or more and 7 nm or less.

The average diameter of the carbon nanotubes means an average value of diameters measured based on images of the carbon nanotubes observed with a transmission electron microscope (TEM). Specifically, the average diameter of the carbon nanotubes is obtained by capturing ten images of the carbon nanotubes at a magnification of 200,000 times using transmission electron microscope JEM-2000FX (manufactured by JEOL Ltd.), measuring the diameters of 100 carbon nanotubes randomly extracted from the obtained images by means of image analysis, and arithmetically averaging the measured values.

The BET specific surface area of the carbon nanotubes is preferably 170 to 320 m²/g. When the BET specific surface area of the carbon nanotubes is 170 m²/g or more, there are more electrical contact points between the active material and the electrical conducting materials and the effect of imparting electrical conductivity becomes favorable, making it much easier to obtain excellent battery characteristics. When the BET specific surface area of the carbon nanotubes is 320 m²/g or less, the interaction between the liquid medium and the electrical conducting materials and the interaction between the electrical conducting materials are reduced, and the carbon nanotubes are likely to be more uniformly dispersed with respect to the active material. This makes it easier for conductive paths to be formed and makes it easier to obtain better battery characteristics.

Herein, the BET specific surface area of the carbon nanotubes is measured by a static capacity method according to JIS Z 8830 using nitrogen as an adsorbate.

From the viewpoint of further reducing the internal resistance and the viewpoint of better discharge rate characteristics and cycle characteristics, the BET specific surface area of the carbon nanotubes may be 180 m²/g or more, 200 m²/g or more, 230 m²/g or more, 250 m²/g or more, or 280 m²/g or more. From the viewpoint of further reducing the internal resistance and the viewpoint of better discharge rate characteristics, the BET specific surface area of the carbon nanotubes may be 310 m²/g or less. That is, the BET specific surface area of the carbon nanotubes may be, for example, 170 m²/g or more and 320 m²/g or less, 180 m²/g or more and 320 m²/g or less, 200 m²/g or more and 320 m²/g or less, 230 m²/g or more and 320 m²/g or less, 250 m²/g or more and 320 m²/g or less, 280 m²/g or more and 320 m²/g or less, 170 m²/g or more and 310 m²/g or less, 180 m²/g or more and 310 m²/g or less, 200 m²/g or more and 310 m²/g or less, 230 m²/g or more and 310 m²/g or less, 250 m²/g or more and 310 m²/g or less, or 280 m²/g or more and 310 m²/g or less.

The ratio (average diameter/BET specific surface area) of the average diameter with respect to the BET specific surface area of the carbon nanotubes is preferably 0.01 to 0.068 nm/(m²/g). The ratio (average diameter/BET specific surface area) above is a value obtained by dividing the average diameter of the carbon nanotubes by the BET specific surface area of the carbon nanotubes. When the ratio (average diameter/BET specific surface area) is 0.01 nm/(m²/g) or more, carbon nanotubes are less entangled with each other and are likely to be more uniformly dispersed with respect to the active material. This makes it easier for conductive paths to be formed and better battery characteristics can be obtained. When the ratio (average diameter/BET specific surface area) is 0.068 nm/(m²/g) or less, the number of carbon nanotubes per unit weight increases and electricity can be allowed to flow more efficiently throughout the entire active material, making it possible to obtain better battery characteristics.

The method for producing carbon nanotubes is not particularly limited. The carbon nanotubes may be produced, for example, by means of a conventionally known carbon nanotube production method.

The carbon nanotubes can be produced by, for example, in a vertical reactor, disposing a powdered catalyst in which iron is supported on magnesia (magnesium oxide) over the entire surface of the reactor in the horizontal cross-section direction, causing methane to flow in a vertical direction in the reactor, and bringing the methane into contact with the catalyst at 500 to 1200 °C, and then subjecting the obtained product (unoxidized carbon nanotubes) to an oxidation treatment. Such a carbon nanotube production method makes it easier to obtain carbon nanotubes consisting of several graphene layers.

The oxidation treatment for the product above may be, for example, a firing treatment. The temperature of the firing treatment is not particularly limited and may be, for example, 300 to 1000 °C. Because the temperature of the firing treatment is affected by the atmospheric gas, it is preferable to perform the firing treatment at a relatively low temperature when the oxygen concentration is high and at a relatively high temperature when the oxygen concentration is low. Specifically, examples of the firing treatment for the product include a method of performing firing within a range of a combustion peak temperature ± 50 °C of the carbon nanotubes prior to the oxidation treatment in atmosphere. However, when the oxygen concentration is higher than that in the atmosphere, firing is performed in a temperature range lower than a firing peak temperature, and when the oxygen concentration is lower than that in the atmosphere, a temperature range higher than the firing peak temperature is selected. In particular, when performing the firing treatment for the carbon nanotubes prior to the oxidation treatment in atmosphere, the firing treatment is preferably performed in a range of a combustion peak temperature ± 15 °C of the carbon nanotubes prior to the oxidation treatment.

The oxidation treatment for the product above may be a treatment with hydrogen peroxide, mixed acid, nitric acid, and the like. Examples of the method of treating the product above with hydrogen peroxide include a method of mixing the product above in 34.5% hydrogen peroxide solution so as to have a concentration of 0.01 to 10% by mass and then allowing a reaction to take place at a temperature of 0 to 100 °C for 0.5 to 48 hours. In addition, examples of the method of treating the product above with mixed acid include a method of mixing the product above with a mixed solution of concentrated sulfuric acid and concentrated nitric acid (concentrated sulfuric acid : concentrated nitric acid = 3 : 1) so as to have a concentration of 0.01 to 10% by mass and then allowing a reaction to take place at a temperature of 0 to 100 °C for 0.5 to 48 hours. The mixing ratio of the mixed acid (concentrated sulfuric acid : concentrated nitric acid) can be adjusted within a range of 1 : 10 to 10 : 1 according to the amount of single-walled carbon nanotubes in the product above. Examples of the method of treating the product above with nitric acid include a method of mixing the product above in nitric acid having a concentration of 40 to 80% by mass so as to have a concentration of 0.01 to 10% by mass and then allowing a reaction to take place at a temperature of 60 to 150 °C for 0.5 to 48 hours.

By subjecting the product above to the oxidation treatment, impurities such as amorphous carbon and single-walled carbon nanotubes having low heat resistance in the product can be selectively removed, and the purity of carbon nanotubes having several graphene layers, particularly those having two to five walls, can be improved. At the same time, by subjecting the product to the oxidation treatment, a functional group is added to the carbon nanotube surface, which improves affinity with dispersion mediums and additives and improves dispersibility. Among the oxidation treatments above, a treatment that uses nitric acid is preferred.

The oxidation treatment above may be performed immediately after obtaining the carbon nanotubes prior to the oxidation treatment and may be performed after a separate purification treatment has been performed. For example, when using iron/magnesia as a catalyst, the oxidation treatment may be performed after the purification treatment using an acid such as hydrochloric acid has been performed in order to remove the catalyst before the oxidation treatment, and the purification treatment may be performed in order to remove the catalyst after the oxidation treatment has been performed.

The amount of the second slurry used and the content of the carbon nanotubes in the second slurry are not particularly limited and may be appropriately changed such that the content of the carbon nanotubes in the positive electrode composition is within a desired range.

The third liquid medium may be any liquid medium capable of dispersing the carbon nanotubes and may be a liquid medium that is compatible with the first liquid medium and the second liquid medium. Examples of the third liquid medium include water, N-methyl-2-pyrrolidone, cyclohexane, methyl ethyl ketone, and methyl isobutyl ketone. Among these, N-methyl-2-pyrrolidone is preferable from the viewpoint of easy dispersibility of the carbon nanotubes. The third liquid medium may be the same as, or different than, the first liquid medium, but is preferably the same as the first liquid medium.

The content of the third liquid medium in the second slurry is not particularly limited. The content may be any content so long as the carbon nanotubes can be dispersed and may be appropriately changed such that the solids concentration of the positive electrode composition is within a desired range.

The solids concentration of the second slurry is not particularly limited and may be, for example, 0.2% by mass or more, and may be 0.8% by mass or more, 1.5% by mass or more, or 2.5% by mass or more. In addition, the solids concentration of the second slurry may be, for example, 15% by mass or less, and may be 12.5% by mass or less, 10% by mass or less, or 7.5% by mass or less. That is, the solids concentration of the second slurry may be, for example, 0.2% by mass or more and 15% by mass or less, 0.2% by mass or more and 12.5% by mass or less, 0.2% by mass or more and 10% by mass or less, 0.2% by mass or more and 7.5% by mass or less, 0.8% by mass or more and 15% by mass or less, 0.8% by mass or more and 12.5% by mass or less, 0.8% by mass or more and 10% by mass or less, 0.8% by mass or more and 7.5% by mass or less, 1.5% by mass or more and 15% by mass or less, 1.5% by mass or more and 12.5% by mass or less, 1.5% by mass or more and 10% by mass or less, 1.5% by mass or more and 7.5% by mass or less, 2.5% by mass or more and 15% by mass or less, 2.5% by mass or more and 12.5% by mass or less, 2.5% by mass or more and 10% by mass or less, or 2.5% by mass or more and 7.5% by mass or less.

The second slurry may further contain components other than carbon nanotubes and a third liquid medium. The second slurry may further contain, for example, polyvinylpyrrolidone, polyvinylimidazole, polyethylene glycol, polyvinyl alcohol, polyvinyl butyral, carboxymethyl cellulose, cellulose acetate, a carboxylic acid-modified (meth)acrylic acid ester copolymer, or the like.

### <Active Material>

The active material may be any material capable of reversibly occluding and releasing cations. The active material may be, for example, a lithium-containing composite oxide including manganese and having a volume resistivity of 1 × 10⁴ Ω·cm or more, or a lithium-containing polyanion compound. Examples of the lithium-containing composite oxide including manganese include lithium manganate such as LiMnO₂, LiMnO₃, LiMn₂O₃, and Li₁₊ₓMn₂₋ₓO₄ (where x = 0 to 0.33); and composite oxides including one or more transition metal elements such as LiMnₓNi_{y}Co_{z}O₂ (where x +y + z = 1, 0 ≤ y < 1, 0 ≤ z < 1, 0 ≤ x < 1), Li₁₊ₓMn_{2-x-y}M_{y}O₄ (where x = 0 to 0.33, y = 0 to 1.0, and 2 - x - y > 0), LiMn₂₋ₓMₓO₂ (where x = 0.01 to 0.1), and Li₂Mn₃MO₈. Examples of the lithium-containing polyanion compound include polyanion compounds such as LiFePO₄, LiMnPO₄, and Li₂MPO₄F (where M is at least one metal selected from Co, Ni, Fe, Cr, and Zn). M in the composition formulas is at least one selected from the group consisting of Fe, Co, Ni, Al, Cu, Mg, Cr, Zn, and Ta.

The average particle diameter (D₅₀) of the active material may be 20 µm or less or 10 µm or less, from the viewpoint that the binding properties between the electrical conducting materials and the binding material is sufficiently excellent and it becomes easier to obtain a battery with better cycle characteristics. The average particle diameter (D₅₀) of the active material can be measured by a laser light scattering method.

The amount of the active material used may be appropriately changed such that the content of the active material in the positive electrode composition is within a desired range.

The positive electrode composition obtained by the production method of the present embodiment contains carbon black, carbon nanotubes, a binding material, and an active material. The positive electrode composition may further contain a dispersant.

The content of carbon black in the positive electrode composition based on the total mass of the solids content may be, for example, 0.01% by mass or more, and may be, from the viewpoint of further reducing the internal resistance and the viewpoint of better discharge rate characteristics, 0.05% by mass or more, 0.1% by mass or more, 0.2% by mass or more, 0.3% by mass or more, 0.4% by mass or more, or 0.5% by mass or more. In addition, the content of carbon black in the positive electrode composition based on the total mass of the solids content in the positive electrode composition may be, for example, 10% by mass or less, 7% by mass or less, 5% by mass or less, 4% by mass or less, 3% by mass or less, or 2% by mass or less. That is, the content of carbon black in the positive electrode composition based on the total mass of the solids content may be, for example, 0.01% by mass or more and 10% by mass or less, 0.01% by mass or more and 7% by mass or less, 0.01% by mass or more and 5% by mass or less, 0.01% by mass or more and 4% by mass or less, 0.01% by mass or more and 3% by mass or less, 0.01% by mass or more and 2% by mass or less, 0.05% by mass or more and 10% by mass or less, 0.05% by mass or more and 7% by mass or less, 0.05% by mass or more and 5% by mass or less, 0.05% by mass or more and 4% by mass or less, 0.05% by mass or more and 3% by mass or less, 0.05% by mass or more and 2% by mass or less, 0.1% by mass or more and 10% by mass or less, 0.1% by mass or more and 7% by mass or less, 0.1% by mass or more and 5% by mass or less, 0.1% by mass or more and 4% by mass or less, 0.1% by mass or more and 3% by mass or less, 0.1% by mass or more and 2% by mass or less, 0.2% by mass or more and 10% by mass or less, 0.2% by mass or more and 7% by mass or less, 0.2% by mass or more and 5% by mass or less, 0.2% by mass or more and 4% by mass or less, 0.2% by mass or more and 3% by mass or less, 0.2% by mass or more and 2% by mass or less, 0.3% by mass or more and 10% by mass or less, 0.3% by mass or more and 7% by mass or less, 0.3% by mass or more and 5% by mass or less, 0.3% by mass or more and 4% by mass or less, 0.3% by mass or more and 3% by mass or less, 0.3% by mass or more and 2% by mass or less, 0.4% by mass or more and 10% by mass or less, 0.4% by mass or more and 7% by mass or less, 0.4% by mass or more and 5% by mass or less, 0.4% by mass or more and 4% by mass or less, 0.4% by mass or more and 3% by mass or less, 0.4% by mass or more and 2% by mass or less, 0.5% by mass or more and 10% by mass or less, 0.5% by mass or more and 7% by mass or less, 0.5% by mass or more and 5% by mass or less, 0.5% by mass or more and 4% by mass or less, 0.5% by mass or more and 3% by mass or less, or 0.5% by mass or more and 2% by mass or less.

The content of carbon nanotubes in the positive electrode composition based on the total mass of the solids content may be, for example, 0.01% by mass or more, and may be, from the viewpoint of further reducing the internal resistance and the viewpoint of better discharge rate characteristics, 0.03% by mass or more, 0.05% by mass or more, 0.07% by mass or more, 0.1% by mass or more, or 0.2% by mass or more. In addition, the content of carbon nanotubes in the positive electrode composition based on the total mass of the solids content in the positive electrode composition may be, for example, 5% by mass or less, and may be 3% by mass or less, 2% by mass or less, 1% by mass or less, 0.9% by mass or less, 0.8% by mass or less, or 0.7% by mass or less. That is, the content of carbon nanotubes in the positive electrode composition based on the total mass of the solids content may be, for example, 0.01% by mass or more and 5% by mass or less, 0.01% by mass or more and 3% by mass or less, 0.01% by mass or more and 2% by mass or less, 0.01% by mass or more and 1% by mass or less, 0.01% by mass or more and 0.9% by mass or less, 0.01% by mass or more and 0.8% by mass or less, 0.01% by mass or more and 0.7% by mass or less, 0.03% by mass or more and 5% by mass or less, 0.03% by mass or more and 3% by mass or less, 0.03% by mass or more and 2% by mass or less, 0.03% by mass or more and 1% by mass or less, 0.03% by mass or more and 0.9% by mass or less, 0.03% by mass or more and 0.8% by mass or less, 0.03% by mass or more and 0.7% by mass or less, 0.05% by mass or more and 5% by mass or less, 0.05% by mass or more and 3% by mass or less, 0.05% by mass or more and 2% by mass or less, 0.05% by mass or more and 1% by mass or less, 0.05% by mass or more and 0.9% by mass or less, 0.05% by mass or more and 0.8% by mass or less, 0.05% by mass or more and 0.7% by mass or less, 0.07% by mass or more and 5% by mass or less, 0.07% by mass or more and 3% by mass or less, 0.07% by mass or more and 2% by mass or less, 0.07% by mass or more and 1% by mass or less, 0.07% by mass or more and 0.9% by mass or less, 0.07% by mass or more and 0.8% by mass or less, 0.07% by mass or more and 0.7% by mass or less, 0.1% by mass or more and 5% by mass or less, 0.1% by mass or more and 3% by mass or less, 0.1% by mass or more and 2% by mass or less, 0.1% by mass or more and 1% by mass or less, 0.1% by mass or more and 0.9% by mass or less, 0.1% by mass or more and 0.8% by mass or less, 0.1% by mass or more and 0.7% by mass or less, 0.2% by mass or more and 5% by mass or less, 0.2% by mass or more and 3% by mass or less, 0.2% by mass or more and 2% by mass or less, 0.2% by mass or more and 1% by mass or less, 0.2% by mass or more and 0.9% by mass or less, 0.2% by mass or more and 0.8% by mass or less, or 0.2% by mass or more and 0.7% by mass or less.

The ratio (C₂/C₁) (mass ratio) of the content (C₂) of the carbon nanotubes with respect to the content (C₁) of the carbon black in the positive electrode composition may be, for example, 0.1 or more, and from the viewpoint of further reducing the internal resistance and the viewpoint of better discharge rate characteristics, may be 0.2 or more, 0.3 or more, or 0.4 or more. In addition, the ratio (C₂/C₁) may be, for example, 1 or less, and may be, from the viewpoint of further reducing the internal resistance and the viewpoint of better discharge rate characteristics, 0.95 or less, 0.9 or less, 0.8 or less, 0.7 or less, 0.6 or less, or 0.5 or less. That is, the ratio (C₂/C₁) may be, for example, 0.1 or more and 1 or less, 0.1 or more and 0.95 or less, 0.1 or more and 0.9 or less, 0.1 or more and 0.8 or less, 0.1 or more and 0.7 or less, 0.1 or more and 0.6 or less, 0.1 or more and 0.5 or less, 0.2 or more and 1 or less, 0.2 or more and 0.95 or less, 0.2 or more and 0.9 or less, 0.2 or more and 0.8 or less, 0.2 or more and 0.7 or less, 0.2 or more and 0.6 or less, 0.2 or more and 0.5 or less, 0.3 or more and 1 or less, 0.3 or more and 0.95 or less, 0.3 or more and 0.9 or less, 0.3 or more and 0.8 or less, 0.3 or more and 0.7 or less, 0.3 or more and 0.6 or less, 0.3 or more and 0.5 or less, 0.4 or more and 1 or less, 0.4 or more and 0.95 or less, 0.4 or more and 0.9 or less, 0.4 or more and 0.8 or less, 0.4 or more and 0.7 or less, 0.4 or more and 0.6 or less, or 0.4 or more and 0.5 or less.

The content of the binding material in the positive electrode composition based on the total mass of the solids content may be, for example, 0.3% by mass or more, and may be, from the viewpoint of the binding properties of the composite layer being further improved and better cycle characteristics, 0.5% by mass or more, 0.7% by mass or more, or 1% by mass or more. In addition, the content of the binding material in the positive electrode composition based on the total mass of the solids content in the positive electrode composition may be, for example, 5% by mass or less, and may be, from the viewpoint of the resistance of the composite layer being further reduced and the discharge rate characteristics being further improved, 4% by mass or less, 3% by mass or less, or 2% by mass or less. That is, the content of the binding material in the positive electrode composition based on the total mass of the solids content may be, for example, 0.3% by mass or more and 5% by mass or less, 0.3% by mass or more and 4% by mass or less, 0.3% by mass or more and 3% by mass or less, 0.3% by mass or more and 2% by mass or less, 0.5% by mass or more and 5% by mass or less, 0.5% by mass or more and 4% by mass or less, 0.5% by mass or more and 3% by mass or less, 0.5% by mass or more and 2% by mass or less, 0.7% by mass or more and 5% by mass or less, 0.7% by mass or more and 4% by mass or less, 0.7% by mass or more and 3% by mass or less, 0.7% by mass or more and 2% by mass or less, 1% by mass or more and 5% by mass or less, 1% by mass or more and 4% by mass or less, 1% by mass or more and 3% by mass or less, or 1% by mass or more and 2% by mass or less.

In addition, the content of the active material in the positive electrode composition based on the total mass of the solids content in the positive electrode composition may be, for example, 80% by mass or more and, from the viewpoint of the battery characteristics being further improved, is preferably 85% by mass or more and may be 87% by mass or more, 89% by mass or more, 91% by mass or more, 93% by mass or more, or 95% by mass or more. In addition, the content of the active material in the positive electrode composition based on the total mass of the solids content in the positive electrode composition may be, for example, 99.5% by mass or less, and may be 99% by mass or less, 98.5% by mass or less, or 98% by mass or less. That is, the content of the active material in the positive electrode composition based on the total mass of the solids content in the positive electrode composition may be, for example, 80% by mass or more and 99.5% by mass or less, 80% by mass or more and 99% by mass or less, 80% by mass or more and 98.5% by mass or less, 80% by mass or more and 98% by mass or less, 85% by mass or more and 99.5% by mass or less, 85% by mass or more and 99% by mass or less, 85% by mass or more and 98.5% by mass or less, 85% by mass or more and 98% by mass or less, 87% by mass or more and 99.5% by mass or less, 87% by mass or more and 99% by mass or less, 87% by mass or more and 98.5% by mass or less, 87% by mass or more and 98% by mass or less, 89% by mass or more and 99.5% by mass or less, 89% by mass or more and 99% by mass or less, 89% by mass or more and 98.5% by mass or less, 89% by mass or more and 98% by mass or less, 91% by mass or more and 99.5% by mass or less, 91% by mass or more and 99% by mass or less, 91% by mass or more and 98.5% by mass or less, 91% by mass or more and 98% by mass or less, 93% by mass or more and 99.5% by mass or less, 93% by mass or more and 99% by mass or less, 93% by mass or more and 98.5% by mass or less, 93% by mass or more and 98% by mass or less, 95% by mass or more and 99.5% by mass or less, 95% by mass or more and 99% by mass or less, 95% by mass or more and 98.5% by mass or less, or 95% by mass or more and 98% by mass or less.

The solids concentration of the positive electrode composition is not particularly limited and may be, for example, 50% by mass or more, preferably 55% by mass or more, more preferably 60% by mass or more, and may be 65% by mass or more or 70% by mass or more. In addition, the solids concentration of the positive electrode composition may be, for example, 90% by mass or less, and from the viewpoint of further lowering the viscosity of the positive electrode composition, is preferably 86% by mass or less and more preferably 82% by mass or less, and may be 78% by mass or less or 74% by mass or less. That is, the solids concentration of the positive electrode composition may be, for example, 50% by mass or more and 90% by mass or less, 50% by mass or more and 86% by mass or less, 50% by mass or more and 82% by mass or less, 50% by mass or more and 78% by mass or less, 50% by mass or more and 74% by mass or less, 55% by mass or more and 90% by mass or less, 55% by mass or more and 86% by mass or less, 55% by mass or more and 82% by mass or less, 55% by mass or more and 78% by mass or less, 55% by mass or more and 74% by mass or less, 60% by mass or more and 90% by mass or less, 60% by mass or more and 86% by mass or less, 60% by mass or more and 82% by mass or less, 60% by mass or more and 78% by mass or less, 60% by mass or more and 74% by mass or less, 65% by mass or more and 90% by mass or less, 65% by mass or more and 86% by mass or less, 65% by mass or more and 82% by mass or less, 65% by mass or more and 78% by mass or less, 65% by mass or more and 74% by mass or less, 70% by mass or more and 90% by mass or less, 70% by mass or more and 86% by mass or less, 70% by mass or more and 82% by mass or less, 70% by mass or more and 78% by mass or less, or 70% by mass or more and 74% by mass or less.

The viscosity of the positive electrode composition at 25 °C and a shear rate of 10 (1/sec) may be, for example, 6000 mPa·s or less, preferably 5000 mPa·s or less, more preferably 4000 mPa·s or less, and may be 3000 mPa·s or less. In addition, the viscosity of the positive electrode composition at 25 °C and a shear rate of 10 (1/sec) may be, for example, 500 mPa·s or more, preferably 600 mPa·s or more, more preferably 700 mPa·s or more, and may be 800 mPa·s or more. That is, the viscosity of the positive electrode composition at 25 °C and a shear rate of 10 (1/sec) may be, for example, 500 mPa·s or more and 6000 mPa·s or less, 500 mPa·s or more and 5000 mPa·s or less, 500 mPa·s or more and 4000 mPa·s or less, 500 mPa·s or more and 3000 mPa·s or less, 600 mPa·s or more and 6000 mPa·s or less, 600 mPa·s or more and 5000 mPa·s or less, 600 mPa·s or more and 4000 mPa·s or less, 600 mPa·s or more and 3000 mPa·s or less, 700 mPa·s or more and 6000 mPa·s or less, 700 mPa·s or more and 5000 mPa·s or less, 700 mPa·s or more and 4000 mPa·s or less, 700 mPa·s or more and 3000 mPa·s or less, 800 mPa·s or more and 6000 mPa·s or less, 800 mPa·s or more and 5000 mPa·s or less, 800 mPa·s or more and 4000 mPa·s or less, or 800 mPa·s or more and 3000 mPa·s or less.

### [Method for Producing Positive Electrode]

A method for producing a positive electrode of the present embodiment includes a step of applying a positive electrode composition produced by the production method discussed above onto a current collector, and forming a composite layer containing carbon black, carbon nanotubes, a binding material, and an active material on the current collector. The composite layer is a layer containing solids (at least carbon black, carbon nanotubes, a binding material, and an active material) in the positive electrode composition and may be a layer formed by removing at least a portion of a liquid medium from the positive electrode composition.

The current collector is not particularly limited and any known current collector can be used without any particular restrictions. As the current collector, for example, metal foils (metals such as gold, silver, copper, platinum, aluminum, iron, nickel, chromium, manganese, lead, tungsten, and titanium, and alloys containing any one of these metals as a main component) are used. Among these, it is preferable to use aluminum for a positive electrode and copper for a negative electrode. The current collector is generally provided in the form of a foil, but is not limited thereto. Perforated foil-shaped and mesh-shaped current collectors can also be used.

The method of applying the positive electrode composition onto the current collector is not particularly limited, and may be, for example, methods such as a die coating method, a dip coating method, a roll coating method, a doctor coating method, a knife coating method, a spray coating method, a gravure coating method, a screen printing method, and an electrostatic coating method.

The amount of the positive electrode composition applied is not particularly limited and may be appropriately adjusted such that the thickness of the composite layer is within a desired range.

The composite layer may be formed by removing at least a portion of a liquid medium from the coating film of the positive electrode composition formed on the current collector. The method of removing the liquid medium is not particularly limited, and examples of a method of removing at least a portion of the liquid medium by vaporizing by means of heating and/or reducing pressure include leaving to dry, a blow dryer, a hot air dryer, an infrared heater, and a far infrared heater.

The method for producing a positive electrode of the present embodiment may further include a pressurization step of pressurizing the composite layer and the current collector in the lamination direction. The pressurization step makes it possible to bring the composite layer and the current collector into close contact with each other.

The pressurization method in the pressurization step is not particularly limited, and may be, for example, a method such as roll pressing, mold pressing, and calendar pressing.

The thickness of the composite layer in the positive electrode is not particularly limited, and may be, for example, 50 µm or more, and from the viewpoint of increasing the capacity of the battery, is preferably 55 µm or more and more preferably 60 µm or more, and may be 65 µm or more or 70 µm or more. In addition, the thickness of the composite layer in the positive electrode may be, for example, 150 µm or less, and from the viewpoint of further increasing the discharge rate characteristics, is preferably 140 µm or less and more preferably 130 µm or less, and may be 120 µm or less or 110 µm or less. That is, the thickness of the composite layer in the positive electrode may be, for example, 50 µm or more and 150 µm or less, 50 µm or more and 140 µm or less, 50 µm or more and 130 µm or less, 50 µm or more and 120 µm or less, 50 µm or more and 110 µm or less, 55 µm or more and 150 µm or less, 55 µm or more and 140 µm or less, 55 µm or more and 130 µm or less, 55 µm or more and 120 µm or less, 55 µm or more and 110 µm or less, 60 µm or more and 150 µm or less, 60 µm or more and 140 µm or less, 60 µm or more and 130 µm or less, 60 µm or more and 120 µm or less, 60 µm or more and 110 µm or less, 65 µm or more and 150 µm or less, 65 µm or more and 140 µm or less, 65 µm or more and 130 µm or less, 65 µm or more and 120 µm or less, 65 µm or more and 110 µm or less, 70 µm or more and 150 µm or less, 70 µm or more and 140 µm or less, 70 µm or more and 130 µm or less, 70 µm or more and 120 µm or less, or 70 µm or more and 110 µm or less.

The positive electrode in the present embodiment can be suitably used as a positive electrode of a battery, particularly a secondary battery (lithium-ion secondary battery).

The battery (preferably a secondary battery and more preferably a lithium-ion secondary battery) in the present embodiment is provided with a positive electrode produced by the production method discussed above. In the battery of the present embodiment, the configuration other than the positive electrode may be the same as that of a known battery.

The applications of the battery in the present embodiment are not particularly limited. For example, the battery can be used in a wide range of fields such as portable AV apparatuses such as digital cameras, video cameras, portable audio players, and portable liquid crystal display televisions, portable information terminals such as notebook computers, smartphones, and mobile PCs, and others such as portable game devices, power tools, electric bicycles, hybrid vehicles, electric vehicles, and power storage systems.

### EXAMPLES

The present invention shall be described in more detail on the basis of the examples below. However, the present invention is not limited to the examples below.

### [Example 1]

### (Carbon Black)

Carbon black was produced by supplying acetylene at 12 Nm³/h, toluene at 32 kg/h, and oxygen at 20 Nm³/h, these being raw materials, from a nozzle installed at an upstream part of a carbon black reaction furnace (furnace length: 6 m, furnace diameter: 0.65 m), and collected by a bag filter installed at a downstream part of the reaction furnace. Thereafter, the collected carbon black was passed through a dry cyclone device and an iron removal magnet and recovered in a tank. Acetylene, toluene, and oxygen were heated to 115 °C and then supplied to the reaction furnace to obtain carbon black A. The obtained carbon black A had a BET specific surface area of 301 m²/g, an average primary particle diameter of 19 nm, and a crystallite size (Lc) of 16 Å.

### (Preparation of First Slurry)

Carbon black A, N-methyl-2-pyrrolidone (referred to as NMP) as a dispersion medium, and polyvinyl alcohol (POVAL B05 manufactured by Denka Company Limited) as a dispersant were prepared. A slurry containing carbon black A was prepared by adding 1.0% by mass of polyvinyl alcohol and 11.0% by mass of carbon black A to 89.0% by mass of NMP and stirring the mixture with a planetary mixer (HIVIS DISPER MIX 3D-5 type manufactured by PRIMIX Corporation) for 120 minutes. The obtained slurry was loaded into a bead mill (Mugen Flow MGF2-ZA manufactured by Ashizawa Finetech Ltd.) equipped with zirconia beads (diameter: 0.5 mm), and a dispersion treatment was performed for 30 minutes. After performing the dispersion treatment, the zirconia beads were removed via filtration to manufacture a carbon black A slurry (first slurry). The particle size distribution of the carbon black A was as shown in Table 1.

### (Preparation of Positive Electrode Composition)

LB-108 (manufactured by Jiangsu Cnano Technology Co., Ltd) was prepared as a multi-walled carbon nanotube slurry. The BET specific surface area of the multi-walled carbon nanotubes was 300 m²/g and the average diameter of the multi-walled carbon nanotubes was 7 nm. In addition, lithium nickel manganese cobalt oxide ("ME6E" manufactured by Beijing Easpring Material Technology Co., Ltd.) having an average particle diameter D₅₀ of 10 µm as an active material, an NMP solution of polyvinylidene fluoride as a binding material, and NMP as a dispersion medium were prepared.

The first slurry above, an NMP solution containing the binding material above, and the multi-walled carbon nanotube slurry above were mixed using a rotation/revolution-type mixer (Awatori Rentaro ARV-310 manufactured by THINKY CORPORATION) to obtain a mixed liquid. Next, the mixed liquid and active material were mixed, NMP was added thereto until a viscosity suitable for coating was achieved, and the mixture was mixed until uniform using the rotation/revolution-type mixer to obtain a positive electrode composition. The positive electrode composition was prepared such that the active material was 97.7% by mass, the carbon black was 0.7% by mass, the multi-walled carbon nanotubes were 0.3% by mass, and the binding material was 1.3% by mass in terms of solids ratio.

### (Production of Positive Electrode)

The positive electrode composition was deposited on one side of an aluminum foil (manufactured by UACJ Corporation) having a thickness of 15 µm using an applicator to create a laminate, which was then left to stand inside a dryer and pre-dried at 105 °C for 1 hour, and NMP was completely removed. Thereafter, pressing and cutting were performed to obtain a positive electrode provided with a current collector and a composite layer.

### (Production of Negative Electrode)

Pure water (manufactured by KANTO CHEMICAL CO., INC.) as a solvent, artificial graphite ("MAG-D" manufactured by Hitachi Chemical Company, Ltd.) as a negative electrode active material, styrene butadiene rubber ("BM-400B" manufactured by Zeon Corporation, hereinafter referred to as "SBR") as a binding material, carboxymethyl cellulose ("D2200" manufactured by Daicel Corporation, hereinafter referred to as "CMC") as a dispersant, and carbon black ("Li-400" manufactured by Denka Company Limited) as an electrical conducting material were prepared. Next, CMC, carbon black, and artificial graphite were weighed and mixed such that CMC was 1% by mass, carbon black was 1% by mass, and artificial graphite was 96% by mass in terms of solids, pure water was added to this mixture, and then the mixture was mixed until uniform using a rotation/revolution-type mixer (Awatori Rentaro ARV-310 manufactured by THINKY CORPORATION) to obtain a mixture. Next, SBR was weighed so as to be 2% by mass in terms of solids and added to the mixture that was obtained, and then the mixture was mixed until uniform using a rotation/revolution-type mixer (Awatori Rentaro ARV-310 manufactured by THINKY CORPORATION) to obtain a coating liquid for negative electrode formation. Next, the coating liquid for negative electrode formation was deposited on a copper foil (manufactured by UACJ Corporation) having a thickness of 10 µm using an applicator to create a laminate, which was then left to stand inside a dryer and pre-dried at 60 °C for 1 hour. Next, the laminate was pressed with a roll press machine at a linear pressure of 50 kg/cm to prepare the laminate such that the thickness of the entire laminate was 60 µm. Next, the laminate was vacuum-dried at 120 °C for three hours to completely remove residual moisture to thereby obtain a negative electrode provided with a current collector and a composite layer.

### (Production of Battery)

The positive electrode, a separator, and the negative electrode were stacked and laminated, and then packed and pre-sealed with an aluminum laminate film. Subsequently, an electrolytic solution was injected and then battery formatting and vacuum sealing were performed to create a laminated secondary battery.

### (Evaluation of Positive Electrode)

### (1) Internal Resistance

For the created battery, constant-current constant-voltage charging limited to 4.3 V and 0.2C was performed at 25 °C and then the battery was discharged to 3.0 V at a constant current of 0.2C. Next, under the same conditions, the battery was charged/discharged for five cycles and then charged such that the depth of charge was 50%. Thereafter, impedance measurement was performed in a frequency range of 10 MHz to 0.001 Hz at an oscillating voltage of 5 mV to measure the internal resistance. The results are shown in Table 1.

### (2) Discharge Rate Characteristics (Rate Capacity Retention Rate)

For the created battery, constant-current constant-voltage charging limited to 4.3 V and 0.2C was performed at 25 °C and then the battery was discharged to 3.0 V at a constant current of 0.2C. Next, the battery was recovery charged with a constant-current constant-voltage limited to 4.3 V and 0.2C again and then discharged to 3.0 V at a constant current of 0.2C, and the discharge capacity at this time was measured. Next, as the recovery charging conditions, while the battery was charged with a constant-current constant-voltage limited to 4.3 V and 0.2C and the discharge current was changed stepwise to 0.5C, 1C, 2C, and 3C, recovery charging and discharging were repeated, and the discharge capacity with respect to each discharge current was measured. As an indicator of the discharge rate characteristics of the battery, the capacity retention rate at the time of 3C discharge with respect to at the time of 0.2C discharge was calculated as the rate capacity retention rate. The results are shown in Table 1.

### [Example 2]

A first slurry was prepared in the same manner as in Example 1, except that the time for the dispersion treatment with the bead mill was set to 20 minutes and the particle size distribution of the carbon black A was changed as shown in Table 1.

The obtained first slurry was used to prepare a positive electrode composition, produce a positive electrode and a negative electrode, produce a battery, and evaluate the positive electrode in the same manner as in Example 1. The results are shown in Table 1.

### [Example 3]

A first slurry was prepared in the same manner as in Example 1, except that the time for the dispersion treatment with the bead mill was set to 40 minutes and the particle size distribution of the carbon black A was changed as shown in Table 1.

The obtained first slurry was used to prepare a positive electrode composition, produce a positive electrode and a negative electrode, produce a battery, and evaluate the positive electrode in the same manner as in Example 1. The results are shown in Table 1.

### [Example 4]

### (Preparation of First Slurry)

Li-435 (manufactured by Denka Company Limited, average primary particle diameter: 23 nm, BET specific surface area: 141 m²/g) as carbon black (hereinafter carbon black B), NMP as a dispersion medium, and polyvinyl alcohol (POVAL B05 manufactured by Denka Company Limited) as a dispersant were prepared. After adding 0.95% by mass of polyvinyl alcohol and 13.5% by mass of Li-435 to 85.6% by mass of NMP, the mixture was stirred with a planetary mixer (HIVIS DISPER MIX 3D-5 type manufactured by PRIMIX Corporation) for 120 minutes. Next, the obtained slurry was loaded into a bead mill (Mugen Flow MGF2-ZA manufactured by Ashizawa Finetech Ltd.) equipped with zirconia beads (diameter: 0.5 mm), and a dispersion treatment was performed for 20 minutes. After performing the dispersion treatment, the zirconia beads were removed via filtration to obtain a first slurry. The particle size distribution of the carbon black B was as shown in Table 1.

This first slurry was used to prepare a positive electrode composition, produce a positive electrode and a negative electrode, produce a battery, and evaluate the positive electrode in the same manner as in Example 1. The results are shown in Table 1.

### [Example 5]

A first slurry was prepared in the same manner as in Example 4, except that the time for the dispersion treatment with the bead mill was set to 10 minutes and the particle size distribution of the carbon black B was changed as shown in Table 1.

The obtained first slurry was used to prepare a positive electrode composition, produce a positive electrode and a negative electrode, produce a battery, and evaluate the positive electrode in the same manner as in Example 1. The results are shown in Table 1.

### [Example 6]

A first slurry was prepared in the same manner as in Example 4, except that the time for the dispersion treatment with the bead mill was set to 30 minutes and the particle size distribution of the carbon black B was changed as shown in Table 1.

The obtained first slurry was used to prepare a positive electrode composition, produce a positive electrode and a negative electrode, produce a battery, and evaluate the positive electrode in the same manner as in Example 1. The results are shown in Table 1.

### [Comparative Example 1]

### (Preparation of Positive Electrode Composition)

A positive electrode composition was prepared in the same manner as in Example 1, except that multi-walled carbon nanotubes were not blended and the blending amount of carbon black A was set to 1.0% by mass.

Other than using the positive electrode composition that was obtained, a positive electrode and a negative electrode were produced, a battery was produced, and the positive electrode was evaluated in the same manner as in Example 1. The results are shown in Table 2.

### [Comparative Example 2]

### (Preparation of Positive Electrode Composition)

A positive electrode composition was prepared in the same manner as in Example 1, except that carbon black was not blended and the blending amount of the multi-walled carbon nanotubes was set to 1.0% by mass.

Other than using the positive electrode composition that was obtained, a positive electrode and a negative electrode were produced, a battery was produced, and the positive electrode was evaluated in the same manner as in Example 1. The results are shown in Table 2.

### [Comparative Example 3]

A positive electrode composition was prepared in the same manner as in Example 1, except that multi-walled carbon nanotubes were not blended and the blending amount of the active material was set to 96.0% by mass, the blending amount of the carbon black B was set to 2.0% by mass, and the blending amount of the binding material was set to 2.0% by mass.

Other than using the positive electrode composition that was obtained, a positive electrode and a negative electrode were produced, a battery was produced, and the positive electrode was evaluated in the same manner as in Example 1. The results are shown in Table 2.

### [Comparative Example 4]

A first slurry was prepared in the same manner as in Example 1, except that the time for the dispersion treatment with the bead mill was set to 60 minutes and the particle size distribution of the carbon black A was changed as shown in Table 2.

The obtained first slurry was used to prepare a positive electrode composition, produce a positive electrode and a negative electrode, produce a battery, and evaluate the positive electrode in the same manner as in Example 1. The results are shown in Table 3.

### [Comparative Example 5]

A first slurry was prepared in the same manner as in Example 1, except that the time for the dispersion treatment with the bead mill was set to 10 minutes and the particle size distribution of the carbon black A was changed as shown in Table 2.

The obtained first slurry was used to prepare a positive electrode composition, produce a positive electrode and a negative electrode, produce a battery, and evaluate the positive electrode in the same manner as in Example 1. The results are shown in Table 3.

### [Comparative Example 6]

A first slurry was prepared in the same manner as in Example 4, except that the time for the dispersion treatment with the bead mill was set to 50 minutes and the particle size distribution of the carbon black B was changed as shown in Table 2.

The obtained first slurry was used to prepare a positive electrode composition, produce a positive electrode and a negative electrode, produce a battery, and evaluate the positive electrode in the same manner as in Example 4. The results are shown in Table 3.

### [Comparative Example 7]

A first slurry was prepared in the same manner as in Example 4, except that the time for the dispersion treatment with the bead mill was set to five minutes and the particle size distribution of the carbon black B was changed as shown in Table 2.

The obtained first slurry was used to prepare a positive electrode composition, produce a positive electrode and a negative electrode, produce a battery, and evaluate the positive electrode in the same manner as in Example 4. The results are shown in Table 3.

**[Table 1]**

| | | **EX. 1** | **EX. 2** | **EX. 3** | **EX. 4** | **EX. 5** | **EX. 6** |
|---|---|---|---|---|---|---|---|
| **CB** | TYPE | A | A | A | B | B | B |
| | SPECIFIC SURFACE AREA (m²/g) | 301 | 301 | 301 | 141 | 141 | 141 |
| | AVERAGE PRIMARY PARTICLE DIAMETER (nm) | 19 | 19 | 19 | 23 | 23 | 23 |
| | D₁₀ (µm) | 0.347 | 0.365 | 0.233 | 0.32 | 0.25 | 0.184 |
| | D₅₀ (µm) | 0.715 | 0.82 | 0.357 | 0.645 | 0.754 | 0.48 |
| | D₉₀ (µm) | 2.064 | 2.52 | 1.857 | 2.23 | 2.23 | 2.019 |
| | D₅₀/(D₉₀ - D₁₀) | 0.42 | 0.38 | 0.22 | 0.34 | 0.38 | 0.26 |
| **CNT** | AVERAGE DIAMETER | 7 | 7 | 7 | 7 | 7 | 7 |
| | SPECIFIC SURFACE AREA (m²/g) | 300 | 300 | 300 | 300 | 300 | 300 |
| **EVALUATION** | INTERNAL RESISTANCE (Ω) | 1.52 | 1.53 | 1.57 | 1.64 | 1.61 | 1.65 |
| | RATE CAPACITY RETENTION RATE (%) | 97.1 | 96.9 | 96.8 | 89.2 | 87.9 | 87.5 |

**[Table 2]**

| | | **COMP. EX. 1** | **COMP. EX. 2** | **COMP. EX. 3** |
|---|---|---|---|---|
| **CB** | TYPE | A | - | B |
| | SPECIFIC SURFACE AREA (m²/g) | 301 | - | 141 |
| | AVERAGE PRIMARY PARTICLE DIAMETER (nm) | 19 | - | 23 |
| | D₁₀ (µm) | 0.347 | - | 0.32 |
| | D₅₀ (µm) | 0.715 | - | 0.645 |
| | D₉₀ (µm) | 2.064 | - | 2.23 |
| | D₅₀/(D₉₀ - D₁₀) | 0.42 | - | 0.34 |
| **CNT** | AVERAGE DIAMETER | - | 7 | - |
| | SPECIFIC SURFACE AREA (m²/g) | - | 300 | - |
| **EVALUATION** | INTERNAL RESISTANCE (Ω) | 1.85 | 1.80 | 1.64 |
| | RATE CAPACITY RETENTION RATE (%) | 95.9 | 84.9 | 82.7 |

**[Table 3]**

| | | **COMP. EX. 4** | **COMP. EX. 5** | **COMP. EX. 6** | **COMP. EX. 7** |
|---|---|---|---|---|---|
| **CB** | TYPE | A | A | B | B |
| | SPECIFIC SURFACE AREA (m²/g) | 301 | 301 | 141 | 141 |
| | AVERAGE PRIMARY PARTICLE DIAMETER (nm) | 19 | 19 | 23 | 23 |
| | D₁₀ (µm) | 0.125 | 0.52 | 0.429 | 0.429 |
| | D₅₀ (µm) | 0.221 | 1.32 | 0.25 | 1.282 |
| | D₉₀ (µm) | 1.325 | 8.88 | 1.821 | 7.53 |
| | D₅₀/(D₉₀ - D₁₀) | 0.18 | 0.16 | 0.18 | 0.18 |
| **CNT** | AVERAGE DIAMETER | 7 | 7 | 7 | 7 |
| | SPECIFIC SURFACE AREA (m²/g) | 300 | 300 | 300 | 300 |
| **EVALUATION** | INTERNAL RESISTANCE (Ω) | 1.70 | 1.70 | 1.73 | 1.72 |
| | RATE CAPACITY RETENTION RATE (%) | 90.4 | 90.4 | 83.5 | 83.5 |

## Claims

1. A method for producing a positive electrode composition, the method comprising:
a preparation step of preparing a first slurry containing carbon black and a first liquid medium; and
a mixing step of obtaining a positive electrode composition by mixing the first slurry, a binding material, carbon nanotubes, and an active material,
wherein in a volume-based particle size distribution of a particle group combining secondary particles of the carbon black and a tertiary particle obtained by aggregation of the secondary particles in the first slurry, D₅₀ is 0.3 µm or more and 0.9 µm or less, and a ratio (D₅₀/(D₉₀ - D₁₀)) of D₅₀ to the difference between D₁₀ and D₉₀ is 0.2 or more and 0.8 or less.

2. The method for production according to claim 1, wherein the mixing step comprises:
a first step of obtaining a mixed liquid by mixing the first slurry, a binding material solution containing the binding material and a second liquid medium, and a second slurry containing the carbon nanotubes and a third liquid medium; and
a second step of obtaining the positive electrode composition by mixing the mixed liquid and an active material.

3. The method for production according to claim 1, wherein the mixing step comprises:
a first step of obtaining a first mixed liquid by mixing the first slurry and a binding material solution containing the binding material and a second liquid medium;
a second step of obtaining a second mixed liquid by mixing the first mixed liquid and a second slurry containing the carbon nanotubes and a third liquid medium; and
a third step of obtaining the positive electrode composition by mixing the second mixed liquid and the active material.

4. The method for production according to claim 1, wherein the carbon black has a BET specific surface area of 100 m²/g or more and 400 m²/g or less and an average primary particle diameter of 17 nm or more and 30 nm or less.

5. The method for production according to claim 1, wherein the content of the carbon black in the positive electrode composition is 40 to 90% by mass based on the total amount of the carbon black and the carbon nanotubes.

6. The method for production according to claim 1, wherein in a volume-based particle size distribution of a particle group combining secondary particles of the carbon black and a tertiary particle obtained by aggregation of the secondary particles in the first slurry, D₁₀ is 0.15 µm or more and 0.42 µm or less, and D₉₀ is 0.9 µm or more and 4.0 µm or less.

7. A method for producing a positive electrode, the method comprising a step of applying a positive electrode composition produced by the method for production according to any one of claims 1 to 6 onto a current collector, and forming a composite layer containing the carbon black, the carbon nanotubes, the binding material, and the active material on the current collector.
